# EUROPÄISCHE PATENTANMELDUNG

(11) **EP 4 378 747 A1**
(43) Veröffentlichungstag der Anmeldung: **05.06.2024**
(21) Anmeldenummer: 23211612.9
(22) Anmeldetag: 22.11.2023
(51) Int. Cl.: B60L 53/30, B60L 53/302, B60L 53/37, B60L 53/65, B60L 53/67, B60L 53/10, B60L 53/31, G06Q 50/06, G07F 15/00

(54) **LADESTATION FÜR ELEKTRISCH ANTREIBBARE KRAFTFAHRZEUGE UND VERFAHREN ZUM BETREIBEN EINER SOLCHEN LADESTATION**

(30) Priorität: 24.11.2022 DE 102022131173
(71) Anmelder: ads-tec Energy GmbH, 72622 Nürtingen (DE)
(72) Erfinder: SCHUCHTER, Johannes, 85630 Grasbrunn (DE); GREIF, Andreas, 73235 Weilheim (DE); MOLCHANOV, Roman, 72654 Neckartenzlingen (DE)
(74) Vertreter: Kordel, Mattias

(57) **Zusammenfassung**

Die Erfindung betrifft eine Ladestation (1) für elektrisch antreibbare Kraftfahrzeuge, wobei die Ladestation (1) eingerichtet ist, um mindestens ein Signal zu erfassen und in Abhängigkeit des erfassten mindestens einen Signals mindestens eine Aktion zu initialisieren.

## Beschreibung

Die Erfindung betrifft eine Ladestation für elektrisch antreibbare Kraftfahrzeuge und ein Verfahren zum Betreiben einer solchen Ladestation.

In Zusammenhang mit dem Betrieb einer Ladestation für elektrisch antreibbare Kraftfahrzeuge entstehen eine Vielzahl von Situationen, in denen eine vorausschauende und/oder rasch initialisierte Aktion wünschenswert ist, um beispielsweise den Ladevorgang für einen Nutzer zu beschleunigen, komfortabler zu machen, das Umfeld der Ladestation angenehmer und/oder sicherer zu gestalten, oder auch einen Zusatznutzen für den Betreiber der Ladestation zu generieren. Herkömmliche Ladestationen weisen jedoch über die Grund-Funktionalität des Ladens von Fahrzeugen keine zusätzlichen Funktionen auf. Insbesondere verfügen sie über keine Informationen über in der nächsten Zukunft zu erwartende Ladevorgänge und können daher im Vorfeld eines Ladevorgangs nicht geeignet konditioniert werden. Dies verzögert den Ladevorgang teilweise erheblich, insbesondere bei besonders heißen oder kalten Außentemperaturen.

Der Erfindung liegt daher die Aufgabe zugrunde, eine Ladestation für elektrisch antreibbare Kraftfahrzeuge und ein Verfahren zum Betreiben einer solchen Ladestation zu schaffen, wobei die genannten Nachteile zumindest reduziert, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Ladestation für elektrisch antreibbare Kraftfahrzeuge geschaffen wird, die eingerichtet ist, um mindestens ein Signal zu erfassen und in Abhängigkeit des erfassten mindestens einen Signals mindestens eine Aktion zu initialisieren. Auf diese Weise wird die Ladestation vorteilhaft gleichsam ertüchtigt, Informationen über ihre Umgebung und/oder die nähere Zukunft wahrzunehmen und angemessen darauf zu reagieren. Dies erlaubt insbesondere eine Beschleunigung und/oder komfortablere Ausgestaltung von Ladevorgängen, die Bereitstellung eines angenehmeren und/oder sichereren Umfelds für den Nutzer, oder auch eine Generierung von Zusatznutzen für den Betreiber der Ladestation.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Unter mindestens einem Signal wird im Kontext der vorliegenden technischen Lehre insbesondere ein Zusatzsignal verstanden, das zusätzlich zu einer unmittelbaren Interaktion der Ladestation mit einem Benutzer sowie einem zu ladenden Kraftfahrzeug im Rahmen des Lade- oder Bezahlvorgangs zugeordneten Signalen erfasst wird. Weiterhin wird unter einem Signal insbesondere jegliche Art von Information - insbesondere unabhängig von der Verkörperung des Signals - verstanden, die automatisch, insbesondere durch eine Steuervorrichtung der Ladestation, verarbeitet werden kann. Insbesondere wird unter einem Signal ein Datenstrom verstanden, insbesondere unabhängig von einer Art, einem Inhalt oder einem Format des Datenstroms.

Gemäß einer Weiterbildung der Erfindung ist vorgesehen, dass die Ladestation mindestens eine Erfassungsvorrichtung aufweist, die eingerichtet ist, um das mindestens eine Signal zu erfassen.

Insbesondere weist die Ladestation die mindestens eine Erfassungsvorrichtung zusätzlich zu einer der unmittelbaren Interaktion der Ladestation mit einem Benutzer im Rahmen des Lade- oder Bezahlvorgangs dienenden Benutzerschnittstelle auf.

In einer Ausführungsform ist die mindestens eine Erfassungsvorrichtung ausgewählt aus einer Gruppe, bestehend aus: Einem Kommunikationsmodul, insbesondere eingerichtet zur Kommunikation über ein Datennetzwerk, und einer Kamera. Vorteilhaft handelt es sich hierbei um besonders geeignete Erfassungsvorrichtungen, insbesondere mit Blick auf die Verwirklichung der zuvor bereits genannten Vorteile.

Ist die mindestens eine Erfassungsvorrichtung ein Kommunikationsmodul, können damit Informationen - insbesondere über ein Datennetzwerk - empfangen und zur Verwirklichung insbesondere der zuvor genannten Vorteile genutzt werden. Das Datennetzwerk kann beispielsweise das Internet, ein lokales Netzwerk, ein Satelliten-Kommunikationsnetzwerk, ein Mobilfunknetz, oder ein anderes Netzwerk sein.

Ist die mindestens eine Erfassungsvorrichtung eine Kamera, können damit vorteilhaft - insbesondere durch Bildauswertung von der Kamera aufgenommener Bilder - in einfacher und schneller Weise Informationen über die unmittelbare Umgebung der Ladestation erhalten und zur Verwirklichung insbesondere der zuvor genannten Vorteile genutzt werden. Die Kamera ist insbesondere eingerichtet zur Aufnahme von statischen Einzelbildern und/oder zur Aufnahme eines zeitlichen Bildstroms, insbesondere eines Videos.

In einer Ausführungsform weist die Ladestation sowohl ein Kommunikationsmodul als eine erste Erfassungsvorrichtung als auch eine Kamera als eine zweite Erfassungsvorrichtung auf. Die Ladestation kann auch eine Mehrzahl an Kommunikationsmodulen und/oder eine Mehrzahl an Kameras aufweisen, insbesondere um mehrere Kommunikationswege und/oder einen größeren Umgebungsbereich abdecken zu können.

In einer Ausführungsform ist die mindestens eine Erfassungsvorrichtung eingerichtet, um das mindestens eine Signal auszuwerten. Vorteilhaft kann dann in einfacher und kostengünstiger Weise die Auswertung des Signals unmittelbar in der Erfassungsvorrichtung erfolgen. Insbesondere ist es möglich, dass die mindestens eine Erfassungsvorrichtung zusätzlich eingerichtet ist, um die mindestens eine Aktion in Abhängigkeit des mindestens einen Signals zu initialisieren. Vorteilhaft bedarf es dann auch hierfür keiner zusätzlichen Vorrichtung.

Gemäß einer Weiterbildung der Erfindung ist vorgesehen, dass die Ladestation eine mit der mindestens einen Erfassungsvorrichtung wirkverbundene Steuervorrichtung aufweist, die eingerichtet ist, um die mindestens eine Aktion in Abhängigkeit des von der Erfassungsvorrichtung erfassten mindestens einen Signals zu initialisieren. Vorteilhaft kann auf diese Weise eine insbesondere leistungsstarke Vorrichtung bereitgestellt werden, um gegebenenfalls das Signal auszuwerten und die mindestens eine Aktion zu starten.

In einer Ausführungsform ist die mindestens eine Erfassungsvorrichtung eingerichtet, um das mindestens eine Signal auszuwerten, wobei die Steuervorrichtung eingerichtet ist, um das ausgewertete Signal zu empfangen und die mindestens eine Aktion in Abhängigkeit des ausgewerteten Signals zu initialisieren. Alternativ ist die Steuervorrichtung eingerichtet, um das von der Erfassungsvorrichtung - insbesondere als Rohsignal - empfangene mindestens eine Signal auszuwerten und die mindestens eine Aktion in Abhängigkeit des ausgewerteten Signals zu initialisieren. Alternativ ist es möglich, dass die Auswertung des mindestens einen Signals zwischen der Erfassungsvorrichtung einerseits und der Steuervorrichtung andererseits aufgeteilt ist, wobei die Erfassungsvorrichtung eingerichtet ist, um mindestens einen ersten Teilschritt zur Auswertung des mindestens einen Signals durchzuführen, wobei die Steuervorrichtung eingerichtet ist, um das teilweise ausgewertete Signal von der Erfassungsvorrichtung zu empfangen und mindestens einen zweiten Teilschritt zur Auswertung des mindestens einen Signals durchzuführen. Die Steuervorrichtung ist insbesondere eingerichtet, um die mindestens eine Aktion in Abhängigkeit des ausgewerteten Signals zu initialisieren.

Gemäß einer Weiterbildung der Erfindung ist vorgesehen, dass die mindestens eine Aktion ausgewählt ist aus einer Gruppe, bestehend aus: Ändern eines Betriebszustand der Ladestation, insbesondere Umschalten der Ladestation aus einem Ruhezustand in einen Aktivzustand, Temperieren, insbesondere Klimatisieren der Ladestation, Einstellen eines Klimatisierungsparameters der Ladestation, Darstellen eines vorbestimmten Inhalts auf einer Anzeigevorrichtung der Ladestation, Senden einer Nachricht oder eines Sendesignals, Aktivieren einer Leuchtvorrichtung der Ladestation, Verändern einer Helligkeit einer Leuchtvorrichtung oder einer Anzeigevorrichtung der Ladestation, Modifizieren der Art und/oder Häufigkeit eines auf einer Anzeigevorrichtung der Ladestation dargestellten Inhalts, Kommunizieren mit mindestens einer anderen Ladestation, Öffnen eines Kommunikationskanals, und Aufbauen einer Kommunikationsverbindung.

Unter einem Temperieren oder Klimatisieren der Ladestation wird insbesondere das Temperieren oder Klimatisieren einer Kühlflüssigkeit, insbesondere eines Kühltanks, der Ladestation verstanden.

Insbesondere wird die Ladestation aus einem Ruhezustand oder Standby-Zustand in einen Aktivzustand geschaltet, wenn auf der Grundlage des mindestens einen Signals erkannt wird, dass in naher Zukunft ein Ladevorgang zu erwarten ist. Hierdurch kann der eigentliche Ladevorgang vorteilhaft beschleunigt werden. Weiterhin kann vorteilhaft eine insbesondere akustische Beeinträchtigung eines Umfelds der Ladestation reduziert werden, wenn die Ladestation nur dann in den Aktivzustand geschaltet wird, wenn tatsächlich ein Ladevorgang erwartet wird.

Insbesondere wird die Ladestation temperiert, insbesondere klimatisiert, wenn auf der Grundlage des mindestens einen Signals erkannt wird, dass in naher Zukunft ein Ladevorgang zu erwarten ist. Hierdurch kann vorteilhaft von Beginn an mit höherer elektrischer Leistung geladen werden.

Insbesondere wird ein Klimatisierungsparameter der Ladestation, insbesondere eine Temperatur, auf welche die Ladestation temperiert wird, oder eine Klimatisierungsleistung, in Abhängigkeit des mindestens einen Signals eingestellt, insbesondere wenn aufgrund des wenigstens einen Signals auf eine Art oder Eigenschaft eines in naher Zukunft zu ladenden Fahrzeugs, insbesondere auf eine erwartete oder maximale Ladeleistung des Fahrzeugs, geschlossen wird. Somit kann zum einen der Ladevorgang beschleunigt werden, zum anderen kann die Konditionierung der Ladestation besonders energieeffizient erfolgen, insbesondere da keine übermäßige Klimatisierung erfolgt.

Insbesondere wird der auf der Anzeigevorrichtung angezeigte Inhalt auf das mindestens eine Signal abgestimmt, wobei das mindestens eine Signal insbesondere eine Art oder Eigenschaft eines Nutzers der Ladestation oder eine im Umfeld der Ladestation momentan herrschende Situation repräsentieren kann. Der angezeigte Inhalt kann somit vorteilhaft zu dem Nutzer und/oder der Situation passend gewählt werden.

Insbesondere wird durch Senden einer Nachricht oder eines Sendesignals in Abhängigkeit des mindestens einen Signals technische, polizeiliche und/oder medizinische Hilfe gerufen.

Insbesondere erregt die Ladestation vorteilhaft durch Aktivieren der Leuchtvorrichtung Aufmerksamkeit eines potentiellen Nutzers und kann diesen dadurch zu der Ladestation leiten, wenn auf der Grundlage des mindestens einen Signals erkannt wird, dass sich ein ladewilliger Nutzer nähert. Das Aktivieren der Leuchtvorrichtung kann insbesondere das Einstellen oder Verändern einer Farbe des durch die Leuchtvorrichtung emittierten Lichts umfassen, beispielsweise auch zeitlich variierende Farben, insbesondere Farbspiele oder dergleichen. Die Leuchtvorrichtung kann dezent in die Ladestation integriert sein, beispielsweise in Lüftungsschlitze der Ladestation.

Insbesondere kann die Ladestation durch Verändern einer Helligkeit einer Leuchtvorrichtung oder einer Anzeigevorrichtung der Ladestation, insbesondere auch durch Aktivieren der zunächst dunklen Anzeigevorrichtung, Aufmerksamkeit erregen, einen potentiellen Nutzer zu sich leiten oder zu einer helleren Umgebungsbeleuchtung und damit einem sichereren Umfeld beitragen, wenn auf der Grundlage des mindestens einen Signals erkannt wird, dass sich ein ladewilliger Nutzer nähert.

Insbesondere kann die Ladestation durch Modifizieren der Art und/oder Häufigkeit eines auf einer Anzeigevorrichtung der Ladestation dargestellten Inhalts auf eine anhand des mindestens einen Signals erkannte Frequentierung der Umgebung der Ladestation, das heißt insbesondere auf eine zeitliche Anzahldichte sowie vorzugsweise auf Eigenschaften von sich in der Umgebung der Ladestation aufhaltenden Personen reagieren und damit angepasste Inhalte anzeigen und/oder Energie in Zusammenhang mit der Anzeige von Inhalten einsparen.

Insbesondere kommuniziert die Ladestation mit mindestens einer anderen, insbesondere benachbarten Ladestation, wenn anhand des mindestens einen Signals erkannt wird, dass ein Kraftfahrzeug mit einer Batterie geladen werden soll, deren Kapazität einen vorbestimmten Kapazitäts-Schwellwert überschreitet und/oder deren Ladezustand einen vorbestimmten Ladezustands-Schwellwert unterschreitet. Die Ladestationen tauschen dann insbesondere untereinander Informationen über Ihren jeweiligen Zustand, insbesondere ihre momentan zur Verfügung stehende Ladeleistung und/oder einen Pufferbatterie-Ladezustand aus; insbesondere handeln die Ladestationen untereinander aus, welche Ladestation besser zum Laden des Kraftfahrzeugs geeignet ist, insbesondere welche das Kraftfahrzeug schneller laden kann. Anschließend sendet mindestens eine der Ladestationen ein Leitsignal aus, um das Kraftfahrzeug zu der besser geeigneten Ladestation zu leiten. Das Leitsignal kann ein elektronisches Leitsignal, ein Licht-Leitsignal, ein auf der Anzeigevorrichtung angezeigtes Leitsignal oder irgendein anderes geeignetes Leitsignal sein.

Insbesondere öffnet die Ladestation einen Kommunikationskanal - insbesondere zu einem technischen Service -, wenn anhand des mindestens einen Signals erkannt wird, dass ein Nutzer technische Probleme beim Laden seines Fahrzeugs hat. Insbesondere kann eine Telefon- oder Videokonferenz-Verbindung zu einem technischen Service aufgebaut werden.

Insbesondere baut die Ladestation eine Kommunikationsverbindung zu einem Endgerät eines Nutzers oder zu einem Kommunikationsmodul eines Kraftfahrzeugs auf, wenn anhand des mindestens einen Signals eine Anforderung hierzu erkannt wird. Der Nutzer oder das Kraftfahrzeug kann dann von dem Endgerät oder dem Kommunikationsmodul insbesondere Inhalte zu der Ladestation hochladen, insbesondere beispielsweise Filme oder Videos auf die Anzeigevorrichtung der Ladestation streamen. Dadurch steht dem Nutzer beispielsweise vorteilhaft ein größeres Display für das Ansehen solcher Inhalte zur Verfügung, als wenn er diese auf seinem mobilen Endgerät oder in seinem Kraftfahrzeug ansieht.

Gemäß einer Weiterbildung der Erfindung ist vorgesehen, dass die mindestens eine Erfassungsvorrichtung als Kamera ausgebildet ist, wobei die Ladestation, insbesondere die Steuervorrichtung, eingerichtet ist, um von der Kamera aufgenommene Bilder auf mindestens ein Prüfmerkmal hin zu prüfen und die mindestens eine Aktion in Abhängigkeit des mindestens einen Prüfmerkmals zu initialisieren. Vorteilhaft kann auf diese Weise insbesondere eine an in der Umgebung der Ladestation stattfindende Vorgänge angepasste Aktion initialisiert werden.

Insbesondere sind dabei die aufgenommenen Bilder das mindestens eine Signal. Alternativ oder zusätzlich ist das mindestens eine Prüfmerkmal, oder die Anwesenheit oder Abwesenheit des Prüfmerkmals in einem Bild, das mindestens eine Signal.

Insbesondere ist die Ladestation, insbesondere die Erfassungsvorrichtung selbst oder die Steuervorrichtung, eingerichtet, um von der Erfassungsvorrichtung aufgenommene Bilder zu verarbeiten, insbesondere um eine Bilderkennung durchzuführen oder in den aufgenommenen Bildern vorbestimmte Merkmale zu erkennen. Hierfür wird insbesondere ein klassischer Bilderkennungsalgorithmus oder eine geeignet trainierte künstliche Intelligenz, insbesondere basierend auf maschinellem Lernen, verwendet.

In einer Ausführungsform ist das mindestens eine Prüfmerkmal ausgewählt aus einer Gruppe, bestehend aus: Einer Annäherung eines Kraftfahrzeugs an die Ladestation, einem ladewilligen Verhalten eines Insassen eines Kraftfahrzeugs im Bereich der Ladestation, einem Fahrzeug-Charakteristikum, insbesondere Fahrzeugtyp oder Fahrzeugmodell eines sich der Ladestation nähernden Kraftfahrzeugs, einem Kennzeichen eines sich der Ladestation nähernden Kraftfahrzeugs, mindestens einer Eigenschaft eines Insassen eines Kraftfahrzeugs im Bereich der Ladestation, einer Anzahl oder Art von Insassen eines Kraftfahrzeugs - und/oder tierischen Begleitern derselben, beispielsweise Hunden - im Bereich der Ladestation, eines Verhaltens einer sich im Bereich der Ladestation aufhaltenden Person oder eines anderen Lebewesens, einer Anzahl von sich im Bereich der Ladestation aufhaltenden Personen, einer Frequentierung des Bereichs der Ladestation durch Personen oder Kraftfahrzeuge, und einer codierten Information, insbesondere einem QR-Code.

Insbesondere wird die Ladestation aus einem Ruhezustand oder Standby-Zustand in einen Aktivzustand geschaltet, wenn erkannt wird, dass sich ein Kraftfahrzeug der Ladestation nähert, oder wenn ein ladewilliges Verhalten eines Insassen eines Kraftfahrzeugs im Bereich der Ladestation erkannt wird.

Insbesondere wird die Ladestation temperiert, insbesondere klimatisiert, wenn erkannt wird, dass sich ein Kraftfahrzeug der Ladestation nähert, oder wenn ein ladewilliges Verhalten eines Insassen eines Kraftfahrzeugs im Bereich der Ladestation erkannt wird.

Alternativ oder zusätzlich erregt die Ladestation vorteilhaft durch Aktivieren der Leuchtvorrichtung Aufmerksamkeit, wenn erkannt wird, dass sich ein Kraftfahrzeug der Ladestation nähert, oder wenn ein ladewilliges Verhalten eines Insassen eines Kraftfahrzeugs im Bereich der Ladestation erkannt wird.

Alternativ oder zusätzlich erregt die Ladestation durch Verändern der Helligkeit der Leuchtvorrichtung oder der Anzeigevorrichtung Aufmerksamkeit, und/oder sie leitet einen potentiellen Nutzer zu sich, und/oder sie trägt zu einer helleren Umgebungsbeleuchtung und damit einem sichereren Umfeld bei, wenn erkannt wird, dass sich ein Kraftfahrzeug der Ladestation nähert, oder wenn ein ladewilliges Verhalten eines Insassen eines Kraftfahrzeugs im Bereich der Ladestation erkannt wird.

Insbesondere wird ein Klimatisierungsparameter der Ladestation, insbesondere eine Temperatur, auf welche die Ladestation temperiert wird, oder eine Klimatisierungsleistung, in Abhängigkeit von einem Fahrzeug-Charakteristikum, insbesondere einem Fahrzeugtyp oder Fahrzeugmodell eines sich der Ladestation nähernden Kraftfahrzeugs, insbesondere in Abhängigkeit einer erwarteten oder maximalen Ladeleistung des Fahrzeugs, gewählt.

Insbesondere kann anhand eines insbesondere spezifischen oder Fahrzeug-individuellen Fahrzeug-Charakteristikums, insbesondere eines Kennzeichens eines sich der Ladestation nähernden Kraftfahrzeugs verifiziert werden, ob das sich nähernde Kraftfahrzeug mit einem Kraftfahrzeug übereinstimmt, von dem zuvor - insbesondere über ein Datennetzwerk - eine Ladeanfrage an die Ladestation gesendet wurde. Die Ladestation kann dann insbesondere den Ladevorgang für andere Kraftfahrzeuge sperren und nur für dasjenige Kraftfahrzeug freigeben, für welches zuvor die Ladeanfrage empfangen wurde. Auf diese Weise ist vorteilhaft eine Reservierung der Ladestation bereits auf dem Weg zu der Ladestation möglich.

Insbesondere wird der auf der Anzeigevorrichtung angezeigte Inhalt auf mindestens eine Eigenschaft oder eine Anzahl oder Art von Insassen eines Kraftfahrzeugs im Bereich der Ladestation - und/oder deren tierische Begleiter, beispielsweise Hunde - abgestimmt.

Insbesondere kommuniziert die Ladestation mit mindestens einer anderen Ladestation, um auszuhandeln, welche der Ladestationen besser zum Laden des sich nähernden Kraftfahrzeugs geeignet ist. Insbesondere kann anhand des Fahrzeug-Charakteristikums auf eine Kapazität einer in dem Kraftfahrzeug verbauten Batterie geschlossen werden.

Insbesondere wird durch Senden einer Nachricht oder eines Sendesignals in Abhängigkeit des Verhaltens einer sich im Bereich der Ladestation aufhaltenden Person oder eines anderen Lebewesens technische, polizeiliche und/oder medizinische Hilfe gerufen. Alternativ oder zusätzlich öffnet die Ladestation einen Kommunikationskanal - insbesondere zu einem technischen Service -, wenn anhand des Verhaltens der sich im Bereich der Ladestation aufhaltenden Personen oder eines anderen Lebewesens ein Bedarf hierfür erkannt wird.

Insbesondere modifiziert die Ladestation die Art und/oder Häufigkeit eines auf einer Anzeigevorrichtung der Ladestation dargestellten Inhalts in Abhängigkeit der Anzahl von sich im Bereich der Ladestation aufhaltenden Personen und/oder einer Frequentierung des Bereichs der Ladestation durch Personen oder Kraftfahrzeuge.

Insbesondere baut die Ladestation eine Kommunikationsverbindung zu einem Endgerät eines Nutzers oder zu einem Kommunikationsmodul eines Kraftfahrzeugs auf, wenn eine entsprechend geeignete codierte Information, insbesondere ein QR-Code erkannt wird.

Gemäß einer Weiterbildung der Erfindung ist vorgesehen, dass die mindestens eine Erfassungsvorrichtung als Kommunikationsmodul ausgebildet ist, das eingerichtet ist, um als das mindestens eine Signal ein Empfangssignal oder eine Nachricht insbesondere aus einem Datennetzwerk zu empfangen.

Insbesondere wird durch das Kommunikationsmodul eine Nachricht empfangen, mit der ein Nutzer eine Ladeanfrage an die Ladestation sendet. Insbesondere kann eine solche Nachricht über eine - insbesondere mobile - Anwendung, insbesondere eine App, generiert werden. Insbesondere kann ein Nutzer auf diese Weise die Ladestation für sich reservieren. Zur Verifizierung der Reservierung kann der Nutzer ein insbesondere spezifisches Fahrzeug-Charakteristikum, beispielsweise das Kennzeichen, den Hersteller, das Modell oder ein anderes Identifikationsmerkmal seines Kraftfahrzeugs an die Ladestation übermitteln. Die Ladestation kann dann vorzugsweise das sich der Ladestation nähernde Kraftfahrzeug anhand des übermittelten Identifikationsmerkmals, insbesondere des Kennzeichens verifizieren, und insbesondere den Ladevorgang für das Kraftfahrzeug freigeben, für welches zuvor die Ladeanfrage empfangen wurde, für andere Kraftfahrzeuge aber den Ladevorgang sperren.

Das Empfangssignal oder die Nachricht kann insbesondere auch eine Information über den Ladezustand eines zu ladenden Kraftfahrzeugs umfassen. Abhängig von dem Ladezustand kann dann insbesondere durch Kommunikation zwischen einer Mehrzahl an Ladestationen eine am besten zum Laden des Kraftfahrzeugs geeignete Ladestation ausgehandelt werden.

Gemäß einer Weiterbildung der Erfindung ist vorgesehen, dass die Ladestation, insbesondere die Steuervorrichtung, eingerichtet ist, um die mindestens eine Aktion zusätzlich in Abhängigkeit von mindestens einem Umgebungsparameter der Ladestation zu initialisieren. Vorteilhaft können auf diese Weise weitere Parameter für den Betrieb der Ladestation genutzt werden.

In einer Ausführungsform ist der mindestens eine Umgebungsparameter ausgewählt aus einer Gruppe, bestehend aus: Einem Standort der Ladestation und einer momentanen Uhrzeit. Vorteilhaft können auf diese Weise insbesondere Belange von der Ladestation benachbarten Einrichtungen oder Personen, insbesondere Anwohnern, berücksichtigt werden, insbesondere in Hinblick auf eine Lärmentwicklung bei der Temperierung oder Klimatisierung der Ladestation. Im Hinblick auf die zu tolerierende Lärmentwicklung ist es beispielsweise relevant, ob die Ladestation in einem Wohngebiet oder an einer Autobahn, insbesondere auf einem Autobahn-Rastplatz, aufgestellt ist.

Alternativ oder zusätzlich kann als der mindestens eine Umgebungsparameter eine Umgebungstemperatur der Ladestation verwendet werden. Die Umgebungstemperatur kann insbesondere bei der Temperierung oder Klimatisierung der Ladestation berücksichtigt werden, insbesondere um diese möglichst energieeffizient durchzuführen.

Gemäß einer Weiterbildung der Erfindung ist vorgesehen, dass die Ladestation, insbesondere die Steuervorrichtung, eingerichtet ist, um anhand von Kamerabildern der als Kamera ausgebildeten Erfassungsvorrichtung zu prüfen, ob sich ein Kraftfahrzeug der Ladestation nähert, und die Ladestation vorzukonditionieren, wenn sich ein Kraftfahrzeug der Ladestation nähert.

Unter Vorkonditionieren wird dabei insbesondere verstanden, dass die Ladestation aus einem Ruhezustand in einen Aktivzustand versetzt und/oder temperiert oder klimatisiert wird.

Insbesondere ist die Ladestation, insbesondere die Steuervorrichtung, eingerichtet, um anhand der Kamerabilder ein Fahrzeug-Charakteristikum, insbesondere einen Fahrzeugtyp, einen Hersteller und/oder ein Modell, eines sich der Ladestation nähernden Kraftfahrzeugs zu erkennen, und mindestens einen Konditionierungsparameter für die Vorkonditionierung, insbesondere den Klimatisierungsparameter, in Abhängigkeit von dem Fahrzeug-Charakteristikum zu wählen.

Gemäß einer Weiterbildung der Erfindung ist vorgesehen, dass die Ladestation, insbesondere die Steuervorrichtung, eingerichtet ist, um anhand von Kamerabildern der als Kamera ausgebildeten Erfassungsvorrichtung eine Aktivität im Bereich der Ladestation zu erkennen und abhängig von der erkannten Aktivität eine aktivitätsbezogene Nachricht auszusenden und/oder einen Kommunikationskanal zu öffnen.

Insbesondere wenn als die Aktivität eine Fehlbedienung oder ein technisches Problem in der Bedienung der Ladestation erkannt wird, wird ein Kommunikationskanal geöffnet, um technische Hilfestellung bereitzustellen, insbesondere in Form einer Sprach- und/oder Video-Kommunikationsverbindung (Video-Chat).

Insbesondere wenn als die Aktivität ein gesundheitliches oder medizinisches Problem einer Person in der Umgebung der Ladestation erkannt wird, wird eine Nachricht an eine Notfallstelle oder einen Hilfsdienst abgesetzt und insbesondere Hilfe herbeigerufen.

Insbesondere wenn als die Aktivität eine unrechtmäßige oder aggressive Handlung gegen die Ladestation selbst oder gegen Personen in der Umgebung der Ladestation, oder eine Straftat, oder Vandalismus oder dergleichen erkannt wird, wird eine Nachricht an eine Polizeidienststelle oder einen Sicherheitsdienst abgesetzt. Alternativ oder zusätzlich wird eine Nachricht auf der Anzeigevorrichtung der Ladestation angezeigt, mit der Personen in der Umgebung der Ladestation darüber informiert werden, dass sie unter Beobachtung stehen, insbesondere fotografiert oder gefilmt werden. Vorzugsweise wird zusätzlich die erkannte Aktivität mittels der Kamera dauerhaft zur Beweissicherung aufgezeichnet und/oder - insbesondere über ein Datennetzwerk - an die Polizeidienststelle oder den Sicherheitsdienst zur Beweissicherung übermittelt.

Gemäß einer Weiterbildung der Erfindung ist vorgesehen, dass die Ladestation, insbesondere die Steuervorrichtung, eingerichtet ist, um anhand von Kamerabildern der als Kamera ausgebildeten Erfassungsvorrichtung eine codierte Information zu erfassen und abhängig von der codierten Information eine Kommunikationsverbindung aufzubauen.

Insbesondere wenn eine zur Herstellung einer datenübertragenden Verbindung geeignete codierte Information, beispielsweise ein auf einem Smartphone oder einem anderen Endgerät angezeigter QR-Code, erkannt wird, wird eine Streaming-Verbindung aufgebaut, über welche der Nutzer von dem insbesondere mobilen Endgerät oder seinem Kraftfahrzeug Inhalte, insbesondere Filme, auf die Anzeigevorrichtung der Ladestation streamen kann.

Die Aufgabe wird auch gelöst, indem ein Verfahren zum Betreiben einer Ladestation, insbesondere einer erfindungsgemäßen Ladestation oder einer Ladestation nach einer oder mehrerer der zuvor beschriebenen Ausführungsformen, geschaffen wird, wobei durch die Ladestation - insbesondere automatisch - mindestens ein Signal erfasst und in Abhängigkeit des erfassten mindestens einen Signals durch die Ladestation - insbesondere automatisch - mindestens eine Aktion initialisiert wird. In Zusammenhang mit dem Verfahren ergeben sich insbesondere diejenigen Vorteile, die bereits in Zusammenhang mit der Ladestation erläutert wurden.

Das Verfahren umfasst insbesondere mindestens einen Schritt, vorzugsweise eine Kombination von Schritten, die zuvor explizit oder implizit bereits in Zusammenhang mit der Ladestation erläutert wurden. Entsprechend ist die Ladestation, insbesondere die Steuervorrichtung, insbesondere eingerichtet, um mindestens einen Schritt, vorzugsweise eine Kombination von Schritten, durchzuführen, die zuvor explizit oder implizit in Zusammenhang mit der Ladestation erläutert wurden.

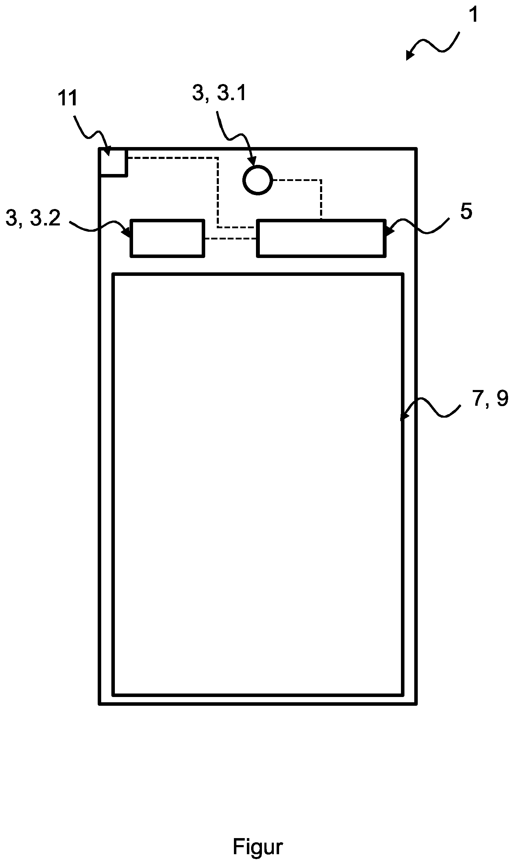

Die Erfindung wird im Folgenden anhand der Zeichnung näher erläutert. Dabei zeigt die einzige
- Figur: eine schematische Darstellung eines Ausführungsbeispiels einer Ladestation für elektrisch antreibbare Fahrzeuge.

Die einzige **Fig.** zeigt eine schematische Darstellung eines Ausführungsbeispiels einer Ladestation 1 für elektrisch antreibbare Fahrzeuge.

Die Ladestation 1 ist eingerichtet, um mindestens ein Signal zu erfassen und in Abhängigkeit des erfassten mindestens einen Signals mindestens eine Aktion zu initialisieren.

Insbesondere weist die Ladestation 1 mindestens eine Erfassungsvorrichtung 3 auf, die eingerichtet ist, um das mindestens eine Signal zu erfassen. Bei dem hier dargestellten Ausführungsbeispiel weist die Ladestation 1 zwei Erfassungsvorrichtungen 3 auf, nämlich eine erste, als Kamera 3.1 ausgebildete Erfassungsvorrichtung 3 und eine zweite, als Kommunikationsmodul 3.2 ausgebildete Erfassungsvorrichtung 3. Mit dem Kommunikationsmodul 3.2 können insbesondere Informationen - insbesondere über ein Datennetzwerk - empfangen werden.

Die Ladestation 1 weist außerdem insbesondere eine mit der Kamera 3.1 und dem Kommunikationsmodul 3.2 wirkverbundene Steuervorrichtung 5 auf, die eingerichtet ist, um die mindestens eine Aktion in Abhängigkeit des von der jeweiligen Erfassungsvorrichtung 3 erfassten mindestens einen Signals zu initialisieren.

Die mindestens eine Aktion ist insbesondere ausgewählt aus einer Gruppe, bestehend aus: Ändern eines Betriebszustand der Ladestation 1, insbesondere Umschalten der Ladestation 1 aus einem Ruhezustand in einen Aktivzustand, Temperieren, insbesondere Klimatisieren der Ladestation 1, Einstellen eines Klimatisierungsparameters der Ladestation 1, Darstellen eines vorbestimmten Inhalts auf einer Anzeigevorrichtung 7 der Ladestation 1, insbesondere einem Display 9, Senden einer Nachricht oder eines Sendesignals, Aktivieren einer Leuchtvorrichtung 11 der Ladestation 1, Verändern einer Helligkeit einer Leuchtvorrichtung 11 oder der Anzeigevorrichtung 7, Modifizieren der Art und/oder Häufigkeit eines auf einer Anzeigevorrichtung 7 dargestellten Inhalts, Kommunizieren mit mindestens einer anderen Ladestation, Öffnen eines Kommunikationskanals, und Aufbauen einer Kommunikationsverbindung.

Die Ladestation 1 ist insbesondere eingerichtet zur Durchführung eines im Folgenden näher beschriebenen Verfahrens. Insbesondere ist die Steuervorrichtung 5 eingerichtet zur Durchführung des Verfahrens.

Insbesondere werden im Rahmen des Verfahrens von der Kamera 3.1 aufgenommene Bilder auf mindestens ein Prüfmerkmal hin geprüft, und die mindestens eine Aktion wird in Abhängigkeit des mindestens einen Prüfmerkmals initialisiert.

Das mindestens eine Prüfmerkmal ist insbesondere ausgewählt aus einer Gruppe, bestehend aus: Einer Annäherung eines Kraftfahrzeugs an die Ladestation 1, einem ladewilligen Verhalten eines Insassen eines Kraftfahrzeugs im Bereich der Ladestation 1, einem Fahrzeug-Charakteristikum, insbesondere einem Fahrzeugtyp oder Fahrzeugmodell eines sich der Ladestation 1 nähernden Kraftfahrzeugs, einem Kennzeichen eines sich der Ladestation nähernden Kraftfahrzeugs, mindestens einer Eigenschaft eines Insassen eines Kraftfahrzeugs im Bereich der Ladestation 1, einer Anzahl oder Art von Insassen eines Kraftfahrzeugs im Bereich der Ladestation 1, eines Verhaltens einer sich im Bereich der Ladestation 1 aufhaltenden Person oder eines anderen Lebewesens, einer Anzahl von sich im Bereich der Ladestation 1 aufhaltenden Personen, einer Frequentierung des Bereichs der Ladestation 1 durch Personen oder Kraftfahrzeuge, und einer codierten Information, insbesondere einem QR-Code.

Insbesondere wird die Ladestation 1 aus einem Ruhezustand oder Standby-Zustand in einen Aktivzustand geschaltet, wenn erkannt wird, dass sich ein Kraftfahrzeug der Ladestation 1 nähert, oder wenn ein ladewilliges Verhalten eines Insassen eines Kraftfahrzeugs im Bereich der Ladestation 1 erkannt wird.

Insbesondere wird die Ladestation 1 temperiert, insbesondere klimatisiert, wenn erkannt wird, dass sich ein Kraftfahrzeug der Ladestation 1 nähert, oder wenn ein ladewilliges Verhalten eines Insassen eines Kraftfahrzeugs im Bereich der Ladestation 1 erkannt wird.

Alternativ oder zusätzlich erregt die Ladestation 1 vorteilhaft durch Aktivieren der Leuchtvorrichtung 11 Aufmerksamkeit, wenn erkannt wird, dass sich ein Kraftfahrzeug der Ladestation 1 nähert, oder wenn ein ladewilliges Verhalten eines Insassen eines Kraftfahrzeugs im Bereich der Ladestation 1 erkannt wird.

Alternativ oder zusätzlich erregt die Ladestation 1 durch Verändern der Helligkeit der Leuchtvorrichtung 11 oder der Anzeigevorrichtung 7 Aufmerksamkeit, und/oder sie leitet oder lockt einen potentiellen Nutzer zu sich, und/oder sie trägt zu einer helleren Umgebungsbeleuchtung und damit einem sichereren Umfeld bei, wenn erkannt wird, dass sich ein Kraftfahrzeug der Ladestation 1 nähert, oder wenn ein ladewilliges Verhalten eines Insassen eines Kraftfahrzeugs im Bereich der Ladestation 1 erkannt wird.

Insbesondere wird ein Konditionierungsparameter, insbesondere der Klimatisierungsparameter der Ladestation 1, insbesondere eine Temperatur, auf welche die Ladestation 1 temperiert wird, oder eine Klimatisierungsleistung, in Abhängigkeit von einem Fahrzeug-Charakteristikum, insbesondere einem Fahrzeugtyp oder Fahrzeugmodell eines sich der Ladestation 1 nähernden Kraftfahrzeugs, insbesondere in Abhängigkeit einer erwarteten oder maximalen Ladeleistung des Fahrzeugs, gewählt.

Insbesondere kann außerdem anhand eines spezifischen Fahrzeug-Charakteristikums, beispielsweise eines Kennzeichens, eines sich der Ladestation 1 nähernden Kraftfahrzeugs verifiziert werden, ob das sich nähernde Kraftfahrzeug mit einem Kraftfahrzeug übereinstimmt, von dem zuvor - insbesondere über ein Datennetzwerk - eine Ladeanfrage an die Ladestation 1 gesendet wurde. Die Ladestation 1 kann dann insbesondere den Ladevorgang für andere Kraftfahrzeuge sperren und nur für das Kraftfahrzeug freigeben, für welches zuvor die Ladeanfrage empfangen wurde. Auf diese Weise ist vorteilhaft eine Reservierung der Ladestation 1 bereits auf dem Weg zu der Ladestation 1 möglich.

Insbesondere wird der auf der Anzeigevorrichtung 7 angezeigte Inhalt auf mindestens eine Eigenschaft eines Insassen eines Kraftfahrzeugs im Bereich der Ladestation 1, oder eine Anzahl oder Art von Insassen eines Kraftfahrzeugs im Bereich der Ladestation 1 abgestimmt.

Insbesondere kommuniziert die Ladestation 1 mit mindestens einer anderen Ladestation, um auszuhandeln, welche der Ladestationen besser zum Laden des sich nähernden Kraftfahrzeugs geeignet ist. Insbesondere kann anhand des Fahrzeug-Charakteristikums auf eine Kapazität einer in dem Kraftfahrzeug verbauten Batterie geschlossen werden. Alternativ oder zusätzlich wird aus dem mindestens einen Signal ein Ladezustand der Batterie des Kraftfahrzeugs erhalten, und die besser geeignete Ladestation wird abhängig von dem Ladezustand ausgehandelt.

Insbesondere wird durch Senden einer Nachricht oder eines Sendesignals in Abhängigkeit des Verhaltens einer sich im Bereich der Ladestation 1 aufhaltenden Person oder eines anderen Lebewesens technische, polizeiliche und/oder medizinische Hilfe gerufen. Alternativ oder zusätzlich öffnet die Ladestation einen Kommunikationskanal - insbesondere zu einem technischen Service -, wenn anhand des Verhaltens der sich im Bereich der Ladestation 1 aufhaltenden Personen oder eines anderen Lebewesens ein Bedarf hierfür erkannt wird.

Insbesondere modifiziert die Ladestation die Art und/oder Häufigkeit eines auf einer Anzeigevorrichtung 7 der Ladestation 1 dargestellten Inhalts in Abhängigkeit der Anzahl von sich im Bereich der Ladestation 1 aufhaltenden Personen und/oder einer Frequentierung des Bereichs der Ladestation 1 durch Personen oder Kraftfahrzeuge.

Insbesondere baut die Ladestation 1 eine Kommunikationsverbindung zu einem Endgerät eines Nutzers oder zu einem Kommunikationsmodul eines Kraftfahrzeugs auf, wenn eine entsprechend geeignete codierte Information, insbesondere ein QR-Code erkannt wird.

Mittels des Kommunikationsmoduls 3.2 wird als das mindestens eine Signal insbesondere ein Empfangssignal oder eine Nachricht - insbesondere aus einem Datennetzwerk - empfangen.

Insbesondere wird durch das Kommunikationsmodul eine Nachricht empfangen, mit der ein Nutzer eine Ladeanfrage an die Ladestation 1 sendet. Das Empfangssignal oder die Nachricht kann insbesondere auch eine Information über den Ladezustand eines zu ladenden Kraftfahrzeugs umfassen.

Die mindestens eine Aktion wird insbesondere zusätzlich in Abhängigkeit von mindestens einem Umgebungsparameter der Ladestation 1, insbesondere einem Standort oder einer momentanen Uhrzeit, initialisiert. Alternativ oder zusätzlich wird als der mindestens eine Umgebungsparameter eine Umgebungstemperatur der Ladestation 1 verwendet.

Insbesondere wird anhand von Kamerabildern der Kamera 3.1 eine Aktivität im Bereich der Ladestation 1 erkannt, und abhängig von der erkannten Aktivität wird eine aktivitätsbezogene Nachricht ausgesendet und/oder ein Kommunikationskanal geöffnet.

Insbesondere wenn als die Aktivität eine Fehlbedienung oder ein technisches Problem in der Bedienung der Ladestation 1 erkannt wird, wird ein Kommunikationskanal geöffnet, um technische Hilfestellung bereitzustellen, insbesondere in Form einer Sprach- und/oder Video-Kommunikationsverbindung (Video-Chat).

Insbesondere wenn als die Aktivität ein gesundheitliches oder medizinisches Problem einer Person in der Umgebung der Ladestation 1 erkannt wird, wird eine Nachricht an eine Notfallstelle oder einen Hilfsdienst abgesetzt und insbesondere Hilfe herbeigerufen.

Insbesondere wenn als die Aktivität eine unrechtmäßige oder aggressive Handlung gegen die Ladestation 1 selbst oder gegen Personen in der Umgebung der Ladestation 1, oder eine Straftat, oder Vandalismus oder dergleichen erkannt wird, wird eine Nachricht an eine Polizeidienststelle oder einen Sicherheitsdienst abgesetzt. Alternativ oder zusätzlich wird eine Nachricht auf der Anzeigevorrichtung 7 der Ladestation 1 angezeigt, mit der Personen in der Umgebung der Ladestation 1 darüber informiert werden, dass sie unter Beobachtung stehen, insbesondere fotografiert oder gefilmt werden. Vorzugsweise wird zusätzlich die erkannte Aktivität mittels der Kamera 3.1 dauerhaft zur Beweissicherung aufgezeichnet, beispielsweise auf einer Festplatte oder einem anderen Datenspeicher digital oder analog gespeichert, und/oder insbesondere über ein Datennetzwerk an die Polizeidienststelle oder den Sicherheitsdienst zur Beweissicherung übermittelt.

Alternativ oder zusätzlich wird anhand der Kamerabilder der Kamera 3.1 eine codierte Information erfasst, und abhängig von der codierten Information wird eine Kommunikationsverbindung, insbesondere eine Streaming-Verbindung zu der Anzeigevorrichtung 7, aufgebaut, sodass visuelle Inhalte, insbesondere Filme, auf die Anzeigevorrichtung 7, insbesondere das Display 9, gestreamt werden können.

## Patentansprüche

1. Ladestation (1) für elektrisch antreibbare Kraftfahrzeuge, wobei die Ladestation (1) eingerichtet ist, um mindestens ein Signal zu erfassen und in Abhängigkeit des erfassten mindestens einen Signals mindestens eine Aktion zu initialisieren.

2. Ladestation (1) nach Anspruch 1, wobei die Ladestation (1) mindestens eine Erfassungsvorrichtung (3) aufweist, die eingerichtet ist, um das mindestens eine Signal zu erfassen, wobei die mindestens eine Erfassungsvorrichtung (3) vorzugsweise ausgewählt ist aus einer Gruppe, bestehend aus: einem Kommunikationsmodul (3.2), insbesondere eingerichtet zur Kommunikation über ein Datennetzwerk, und einer Kamera (3.1).

3. Ladestation (1) nach Anspruch 2, wobei die Ladestation (1) eine mit der mindestens einen Erfassungsvorrichtung (3) wirkverbundene Steuervorrichtung (5) aufweist, die eingerichtet ist, um die mindestens eine Aktion in Abhängigkeit des von der Erfassungsvorrichtung (3) erfassten mindestens einen Signals zu initialisieren.

4. Ladestation (1) nach einem der vorhergehenden Ansprüche, wobei die mindestens eine Aktion ausgewählt ist aus einer Gruppe, bestehend aus: Ändern eines Betriebszustand der Ladestation (1), insbesondere Umschalten der Ladestation (1) aus einem Ruhezustand in einen Aktivzustand, Temperieren, insbesondere Klimatisieren der Ladestation (1), Einstellen eines Klimatisierungsparameters der Ladestation (1), Darstellen eines vorbestimmten Inhalts auf einer Anzeigevorrichtung (7) der Ladestation (1), Senden einer Nachricht oder eines Sendesignals, Aktivieren einer Leuchtvorrichtung (11) der Ladestation (1), Verändern einer Helligkeit einer Leuchtvorrichtung (11) oder einer Anzeigevorrichtung (7) der Ladestation (1), Modifizieren der Art und/oder Häufigkeit eines auf einer Anzeigevorrichtung (7) der Ladestation (1) dargestellten Inhalts, Kommunizieren mit mindestens einer anderen Ladestation, Öffnen eines Kommunikationskanals, und Aufbauen einer Kommunikationsverbindung.

5. Ladestation (1) nach einem der Ansprüche 2 bis 4, wobei die mindestens eine Erfassungsvorrichtung (3) als Kamera (3.1) ausgebildet ist, und wobei die Ladestation (1) eingerichtet ist, um von der Kamera (3.1) aufgenommene Bilder auf mindestens ein Prüfmerkmal hin zu prüfen und die mindestens eine Aktion in Abhängigkeit des mindestens einen Prüfmerkmals zu initialisieren, wobei insbesondere das mindestens eine Prüfmerkmal ausgewählt ist aus einer Gruppe, bestehend aus: Einer Annäherung eines Kraftfahrzeugs an die Ladestation (1), einem ladewilligen Verhalten eines Insassen eines Kraftfahrzeugs im Bereich der Ladestation (1), einem Fahrzeug-Charakteristikum, insbesondere einem Fahrzeugtyp oder Fahrzeugmodell eines sich der Ladestation (1) nähernden Kraftfahrzeugs, einem Kennzeichen eines sich der Ladestation (1) nähernden Kraftfahrzeugs, mindestens einer Eigenschaft eines Insassen eines Kraftfahrzeugs im Bereich der Ladestation (1), einer Anzahl oder Art von Insassen eines Kraftfahrzeugs im Bereich der Ladestation (1), eines Verhaltens einer sich im Bereich der Ladestation (1) aufhaltenden Person oder eines anderen Lebewesens, einer Anzahl von sich im Bereich der Ladestation (1) aufhaltenden Personen, einer Frequentierung des Bereichs der Ladestation (1) durch Personen oder Kraftfahrzeuge, und einer codierten Information, insbesondere einem QR-Code.

6. Ladestation (1) nach einem der Ansprüche 2 bis 4, wobei die mindestens eine Erfassungsvorrichtung (3) als Kommunikationsmodul (3.2) ausgebildet ist, das eingerichtet ist, um als das mindestens eine Signal ein Empfangssignal oder eine Nachricht, insbesondere aus einem Datennetzwerk, zu empfangen.

7. Ladestation (1) nach einem der vorhergehenden Ansprüche, wobei die Ladestation (1) eingerichtet ist, um die mindestens eine Aktion zusätzlich in Abhängigkeit von mindestens einem Umgebungsparameter der Ladestation (1) zu initialisieren, wobei der mindestens eine Umgebungsparameter insbesondere ausgewählt ist aus einer Gruppe, bestehend aus: Einem Standort der Ladestation (1) und einer momentanen Uhrzeit.

8. Ladestation (1) nach einem der Ansprüche 2 bis 7, wobei die Ladestation (1) eingerichtet ist, um anhand von Kamerabildern der als Kamera (3.1) ausgebildeten Erfassungsvorrichtung (3) zu prüfen, ob sich ein Kraftfahrzeug der Ladestation (1) nähert, und die Ladestation (1) vorzukonditionieren, wenn sich ein Kraftfahrzeug der Ladestation (1) nähert.

9. Ladestation (1) nach einem der Ansprüche 2 bis 8, wobei die Ladestation (1) eingerichtet ist, um anhand von Kamerabildern der als Kamera (3.1) ausgebildeten Erfassungsvorrichtung (3) eine Aktivität im Bereich der Ladestation (1) zu erkennen und abhängig von der erkannten Aktivität eine aktivitätsbezogene Nachricht auszusenden und/oder einen Kommunikationskanal zu öffnen.

10. Ladestation (1) nach einem der Ansprüche 2 bis 9, wobei die Ladestation (1) eingerichtet ist, um anhand von Kamerabildern der als Kamera (3.1) ausgebildeten Erfassungsvorrichtung (3) eine codierte Information zu erfassen und abhängig von der codierten Information eine Kommunikationsverbindung aufzubauen.

11. Verfahren zum Betreiben einer Ladestation (1), insbesondere nach einem der vorhergehenden Ansprüche, wobei durch die Ladestation (1), insbesondere automatisch, mindestens ein Signal erfasst wird und in Abhängigkeit des erfassten mindestens einen Signals durch die Ladestation (1), insbesondere automatisch, mindestens eine Aktion initialisiert wird.
